Europäisches Patentamt

European Patent Office

Office européen des brevets

(19)

(11) Veröffentlichungsnummer : **0 111 239**
**B1**

(12)                    **EUROPÄISCHE PATENTSCHRIFT**

(45) Veröffentlichungstag der Patentschrift :
04.03.87

(21) Anmeldenummer : 83111923.5

(22) Anmeldetag : 29.11.83

(51) Int. Cl.⁴ : **C 09 J** **3/14**, C 08 L 31/04,
C 09 J 5/00

(54) **Verfahren zur Herstellung einer Verklebung mit Hilfe eines Kontaktklebstoffes.**

(30) Priorität : 03.12.82 DE 3244755

(43) Veröffentlichungstag der Anmeldung :
20.06.84 Patentblatt 84/25

(45) Bekanntmachung des Hinweises auf die Patenterteilung : 04.03.87 Patentblatt 87/10

(84) Benannte Vertragsstaaten :
AT BE CH DE FR GB IT LI NL SE

(56) Entgegenhaltungen :
FR-A- 2 116 115
FR-A- 2 159 876

(73) Patentinhaber : HOECHST AKTIENGESELLSCHAFT
Postfach 80 03 20
D-6230 Frankfurt am Main 80 (DE)

(72) Erfinder : Dexheimer, Hans, Dr.
Egerländer Strasse 11
D-6233 Kelkheim (Taunus) (DE)

EP 0 111 239 B1

# 0 111 239

**Beschreibung**

Die Erfindung betrifft ein Verfahren zur Herstellung einer Verklebung zwischen zwei Werkstoffen durch Auftragen eines Kontaktklebstoffes auf die Oberflächen der zu verklebenden Werkstoffe und Zusammenfügen der so beschichteten Werkstoffoberflächen unter Anwendung von Druck.

Kontaktklebstoffe sind bekanntlich Klebstoffe, die auf beide zu verklebende Werkstoffoberflächen aufgetragen werden, und die Verklebung wird durch Zusammendrücken der mit dem Klebstoff beschichteten Werkstoffe erzielt. Handelsübliche Kontaktklebstoffe auf Kunstharzbasis enthalten als Kunstharz Polychloropren, das in einem Lösemittelgemisch gelöst oder kolloidal dispergiert ist ; typische Lösemittelsysteme sind Gemische von aliphatischen und aromatischen Kohlenwasserstoffen mit Lösemitteln, die im Molekül Sauerstoff enthalten, z. B. Ketone und Ester (vgl. Handbook of Adhesives, Van Nostrand Reinhold Comp., 1977, Seiten 343 bis 367).

Ferner ist bekannt, daß Vinylacetat/Ethylen-Copolymere in dispergierter Form die Grundlage von üblichen wäßrigen Dispersionsklebstoffen bilden. Handelsübliche Produkte sind wäßrige Dispersionen von Copolymeren, die aus 60 bis 95 Gewichtsprozent Vinylacetat und 5 bis 40 Gewichtsprozent Ethylen zusammengesetzt sind. Bekannte Copolymere dieser Art weisen eine Glasübergangstemperatur im Bereich von — 30 bis + 3 °C auf (vgl. Handbook of Adhesives, Van Nostrand Reinhold Comp., 1977, Seiten 484 bis 494).

Aufgabe der Erfindung ist die Herstellung von Verklebungen mit Hilfe eines Kontaktklebstoffes, der weitgehend frei von Lösemitteln und daher besonders umweltfreundlich ist.

Die Erfindung betrifft ein Verfahren zur Herstellung einer Verklebung zwischen zwei Werkstoffen durch Auftragen eines Kontaktklebstoffes auf die Oberflächen der zu verklebenden Werkstoffe und Zusammenfügen der so beschichteten Werkstoffoberflächen unter Anwendung von Druck, das dadurch gekennzeichnet ist, daß als Kontaktklebstoff eine wäßrige Kunststoffdispersion mit einem Feststoffgehalt von 40 bis 60 Gewichtsprozent verwendet wird, die als Kunststoff ein Copolymer aus 60 bis 85 Gewichtsprozent Vinylacetat und 15 bis 40 Gewichtsprozent Ethylen enthält, die Kunststoffdispersion in einer Menge von 25 bis 400 g/m² auf die Oberfläche der Werkstoffe aufgebracht wird und die Werkstoffe nach erfolgter Filmbildung mit einem Druck von mindestens 0,5 bar aufeinandergepreßt werden.

Die erfindungsgemäß verwendete wäßrige Kunststoffdispersion enthält als Kunststoff ein Copolymer aus 60 bis 85 Gewichtsprozent Vinylacetat und 15 bis 40 Gewichtsprozent Ethylen. Vorzugsweise ist das Copolymer aus 70 bis 80 Gewichtsprozent Vinylacetat und 20 bis 30 Gewichtsprozent Ethylen zusammengesetzt. Der Ethylengehalt des Copolymers läßt sich durch Messung der Glasübergangstemperatur des Copolymers ermitteln, da bekanntlich die Glasübergangstemperatur mit steigendem Ethylengehalt nahezu linear abnimmt. Das Copolymer weist eine Glasübergangstemperatur ($T_g$) von — 40 bis + 5 °C, vorzugsweise — 30 bis — 5 °C, auf ; die Glasübergangstemperatur des Copolymers wird durch Differentialthermoanalyse bei einer Aufheizgeschwindigkeit von 10 °C/min ermittelt.

Besonders vorteilhaft ist der Einsatz eines Vinylacetat/Ethylen-Copolymers, das als Film in getrocknetem Zustand bei einer Stärke von 0,5 mm eine Reißfestigkeit von 0,1 bis 5 N/mm² und eine Dehnung von 500 bis 5 000 Prozent aufweist (jeweils gemessen mit einer Abzugsgeschwindigkeit von 200 mm/min bei einer Temperatur von 23 °C und einer relativen Luftfeuchtigkeit von 50 Prozent). Vorzugsweise beträgt die Reißfestigkeit 0,3 bis 3,5 N/mm² und die Dehnung 1 000 bis 4 000 Prozent.

Die Kunststoffdispersion wird in üblicher Weise durch Polymerisieren von Vinylacetat und Ethylen in einem wäßrigen Medium, das einen radikalisch wirksamen Initiator sowie gegebenenfalls einen Emulgator und ein Schutzkolloid enthält, bei einer Temperatur von 50 bis 70 °C unter einem Druck von 10 bis 100 bar hergestellt (vgl. z. B. deutsche Patentschrift 1 127 085 = britische Patentschrift 991 550). Die genannten Monomeren können auch in Kombination mit weiteren Monomeren eingesetzt werden, insbesondere mit carboxylgruppenhaltigen Monomeren oder hydroxylgruppenhaltigen Monomeren. Beispiele hierfür sind Acrylsäure, Methacrylsäure und Crotonsäure sowie N-Methylolacrylamid und N-Methylolmethacrylamid. Der Einsatz der letzteren Monomergruppe ist vor allem dann vorteilhaft, wenn das Copolymer während oder nach der Anwendung in Form der wäßrigen Dispersion vernetzt werden soll, insbesondere durch Wärmezufuhr. Die zusätzlichen Monomeren werden jeweils in einer Menge von 1 bis 5 Gewichtsprozent (bezogen auf die Gesamtmenge von Vinylacetat und Ethylen) eingesetzt.

Die erfindungsgemäß verwendete Kunststoffdispersion hat einen Feststoffgehalt von 40 bis 60, vorzugsweise 45 bis 55 Gewichtsprozent. Sie ist bevorzugt mitteldispers, d. h. die durchschnittliche Partikelgröße (Teilchendurchmesser) des dispergierten Copolymers liegt im Bereich von 0,5 bis 2 µm. Der pH-Wert der Dispersion beträgt 3 bis 6, vorzugsweise 4 bis 5. Ihre Viskosität beträgt 1 bis 5, vorzugsweise 1,5 bis 4 Pa · s (gemessen nach DIN 53788 mit Contraves-Rheometer STV, Meßsystem C II). Die Mindestfilmbildetemperatur (MFT) der Kunststoffdispersion liegt bei 0 °C (gemessen nach DIN 53787).

Die Kunststoffdispersion wird erfindungsgemäß als Kontaktklebstoff verwendet. Sie eignet sich zum Verkleben von saugfähigen Werkstoffen, z. B. Holz, Papier, Leder und Textilien, und von nichtsaugfähigen Werkstoffe, z. B. Metall, Glas, Gummi und Kunststoffe. Auch verschiedene Werkstoffe können miteinander verklebt werden.

Die Kunststoffdispersion wird in einer Menge von 20 bis 400, vorzugsweise 50 bis 250 g/m² auf die Oberfläche der zu verklebenden Werkstoffe aufgebracht, wobei diese Menge im Einzelfall von der Art der Werkstoffe abhängig ist. Nach dem Aufbringen der Kunststoffdispersion und erfolgter Filmbildung werden die Werkstoffe mit einem Druck von mindestens 0,5 bar, vorzugsweise 1 bis 20 bar, aufeinandergepreßt, und zwar wieder in Abhängigkeit von der Art der beteiligten Werkstoffe. Zur Erzielung einer guten Verklebung ist ein kurzzeitiger Druck völlig ausreichend ; die Druckausübung erfolgt im allgemeinen über einen Zeitraum von 1 bis 30, vorzugsweise 5 bis 25 Sekunden. Statt einer einzigen Dispersion kann auch ein Gemisch von mehreren Dispersionen eingesetzt werden, die sich durch die Art des Vinylacetat/Ethylen-Copolymers unterscheiden.

Gegebenenfalls wird die Verklebung bei erhöhter Temperatur durchgeführt, insbesondere bei Anwendung eines Copolymers, das vernetzende Gruppen aufweist, sowie in Abhängigkeit von der Art der Werkstoffe. Dazu werden die mit der Kunststoffdispersion beschichteten Werkstoffe bei einer Temperatur von 30 bis 80 °C, vorzugsweise 40 bis 70 °C, aufeinandergepreßt.

Die kunststoffdispersion ergibt einen klaren Film. Sie kann durch Zusatz üblicher Pigmente eingefärbt werden, und die Farbe der Verklebung kann dadurch auf die Farbe des Werkstoffs abgestimmt werden. Der Werkstoff, der mit der Kunststoffdispersion beschichtet ist, muß — im Gegensatz zu Werkstoffen, die mit handelsüblichen, lösemittelhaltigen Kontaktklebstoffen beschichtet sind — nicht nach einer Ablüftzeit von etwa 15 bis 30 Minuten verklebt werden ; vielmehr bleibt die Klebschicht noch mehrere Tage lang aktiv für Kontaktverklebungen.

Bei Verwendung eines Gemischs verschiedener Dispersionen läßt sich die Adhäsion des Klebstoffs durch Variation der Zusammensetzung des Gemischs in einfacher Weise steuern. Auch die Wasserempfindlichkeit des aus dem Dispersionsgemisch erhaltenen Films kann so auf gewünschte Werte eingestellt werden.

Die Festigkeit der Verklebung wird durch Prüfung der Scherfestigkeit (nach 2 Stunden und nach 7 Tagen) und gegebenenfalls der Schälfestigkeit (nach 2 Stunden) ermittelt (vgl. DIN 53273).

Die folgenden Beispiele dienen zur näheren Erläuterung der Erfindung. Prozent- und Verhältnisangaben beziehen sich jeweils auf das Gewicht.

## Beispiele 1 bis 4

Verschiedene wäßrige Dispersionen von Vinylacetat/Ethylen-Copolymeren wurden mit hilfe einer Drahtrakel in einer Menge von jeweils 200 g/m$^2$ oder 100 g/m$^2$ auf zwei rechteckigen Platten (3 cm × 8 cm) aus dem gleichen Werkstoff derart aufgetragen, daß die zur Verklebung vorgesehene Fläche 3 cm × 3 cm betrug. Nach dem Auftragen der Dispersion und Ausbildung eines Film wurden die beschichteten Seiten der Platten aufeinandergelegt und 20 Sekunden lang mit einem Druck von 10 bar aufeinandergepreßt. Die Scherfestigkeit der so erhaltenen Verklebungen wurde unter Verwendung einer handelsüblichen Reißmaschine bei einer Abzugsgeschwindigkeit von 200 mm/min geprüft. Bei einigen Verklebungen wurde auch die Schälfestigkeit untersucht.

Zum Vergleich wurde ein handelsüblicher Kontaktklebstoff (Polychloropren in Lösung) geprüft (Beispiel A). Hierbei mußte eine Ablüftzeit von 15 min eingehalten werden.

Die Einzelheiten und die Prüfergebnisse sind aus den Tabellen 1 bis 5 ersichtlich.

Tabelle 1

| Beispiel | 1 | 2 | 3 | 4[*] |
|---|---|---|---|---|
| Feststoffgehalt der Dispersion (%) | 50 | 60 | 50 | 55 |
| pH-Wert der Dispersion | 4 | 4,5 | 4,5 | 4,5 |
| Viskosität der Dispersion (m Pa·s) | 2500 | 1500 | 3500 | 2500 |
| VA/E-Copolymer (%) | 27 | 23 | 25 | – |
| $T_g$ des Copolymers (°C) | –12 | –8 | –10 | – |
| Partikelgröße des Copolymers (μm) | 0,5–1 | 0,5–5 | 0,5–5 | – |
| Reißfestigkeit des Copolymer-Films (N/mm$^2$) | 0,3 | 2,0 | 1,0 | 1,5 |
| Dehnung des Copolymer-Films (%) | 3000 | 1000 | 2000 | 1500 |

[*] Die in Beispiel 4 verwendete Dispersion ist ein 1 : 1-Gemisch der Dispersionen gemäß Beispielen 2 und 3.

Tabelle 2

Verklebte Werkstoffe : PVC/PVC (Fußbodenmaterial)

| Dispersion aus Beispiel | Dispersions-menge (g/m$^2$) | Scherfestigkeit (N/cm$^2$) nach 2 h | nach 7 d | Schälfestigkeit nach 2 h (N/cm) |
|---|---|---|---|---|
| 1 | 200 | 41 | – | – |
| 2 | 200 | 39 | – | – |
| 3 | 200 | 47 | 47 | – |
| 3 | 100 | 48 | 47 | 30 |
| 4 | 100 | 46 | – | – |
| A | 200 | 33 | 41 | – |
| A | 200 | 34 | 42 | 4 |

Tabelle 3

Verklebte Werkstoffe : Gummi/Gummi (Sohlengummi der Fa. Freudenberg KG, Weinheim)

| Dispersion aus Beispiel | Dispersions-menge (g/m$^2$) | Scherfestigkeit (N/cm$^2$) nach 2 h | nach 7 d | Schälfestigkeit nach 2 h (N/cm) |
|---|---|---|---|---|
| 1 | 200 | 28 | – | – |
| 2 | 200 | 40 | – | – |
| 3 | 200 | 50 | – | – |
| 3 | 100 | 57 | 61 | 29 |
| 4 | 100 | 44 | – | – |
| A | 200 | 50 | 56 | – |
| A | 100 | – | 36 | 24 |

Tabelle 4

Verklebte Werkstoffe : Eisenblech/Eisenblech

| Dispersion aus Beispiel | Dispersionsmenge (g/m$^2$) | Scherfestigkeit nach 2 h (N/cm$^2$) |
|---|---|---|
| 1 | 200 | 70 |
| 2 | 200 | 89 |
| 3 | 200 | 106 |
| A | 200 | 83 |

Tabelle 5

Verklebte Werkstoffe : Buchenholz/Buchenholz

| Dispersion aus Beispiel | Dispersionsmenge $(g/m^2)$ | Scherfestigkeit nach 2 h $(N/cm^2)$ |
|---|---|---|
| 1 | 200 | 52 |
| 2 | 200 | 30 |
| 3 · | 200 | 42 |
| A | 200 | 11 |

**Patentansprüche**

1. Verfahren zur Herstellung einer Verklebung zwischen zwei Werkstoffen durch Auftragen eines Kontaktklebstoffes auf die Oberflächen der zu verklebenden Werkstoffe und Zusammenfügen der so beschichteten Werkstoffoberflächen unter Anwendung von Druck, dadurch gekennzeichnet, daß als Kontaktklebstoff eine wäßrige Kunststoffdispersion mit einem Feststoffgehalt von 40 bis 60 Gewichtsprozent verwendet wird, die als Kunststoff ein Copolymer aus 60 bis 85 Gewichtsprozent Vinylacetat und 15 bis 40 Gewichtsprozent Ethylen enthält, wobei das Copolymer zusätzlich noch jeweils 1 bis 5 Gew.-%, bezogen auf die Gesamtmenge von Vinylacetat und Ethylen, carboxylgruppenhaltige und/oder hydroxylgruppenhaltige Monomereinheiten enthalten kann, die Kunststoffdispersion in einer Menge von 25 bis 400 g/m² auf die Oberfläche der Werkstoffe aufgebracht wird und die Werkstoffe nach erfolgter Filmbildung mit einem Druck von mindestens 0,5 bar aufeinander gepreßt werden.

2. Verfahren nach Anspruch 1, dadurch gekennzeichnet, daß eine Kunststoffdispersion verwendet wird, die als Kunststoff ein Copolymer enthält, das als Film in getrocknetem Zustand bei einer Stärke von 0,5 mm eine Reißfestigkeit von 0,1 bis 5 N/mm² aufweist (gemessen bei einer Temperatur von 23 °C und einer relativen Luftfeuchtigkeit von 50 Prozent).

3. Verfahren nach Anspruch 1, dadurch gekennzeichnet, daß eine Kunststoffdispersion verwendet wird, die als Kunststoff ein Copolymer enthält, das als Film in getrocknetem Zustand bei einer Stärke von 0,5 mm eine Dehnung von 500 bis 5 000 Prozent aufweist (gemessen bei einer Temperatur von 23 °C und einer relativen Luftfeuchtigkeit von 50 Prozent).

4. Verfahren nach Anspruch 1, dadurch gekennzeichnet, daß die mit der Kunststoffdispersion beschichteten Werkstoffe bei einer Temperatur von 30 bis 80 °C aufeinandergepreßt werden.

**Claims**

1. Process for producing an adhesive bond between two materials by applying a contact adhesive to the surfaces of the materials to be bonded to each other and joining the surfaces thus coated under the application of pressure, which comprises using as the contact adhesive an aqueous plastics dispersion which has a solids content of 40 to 60 per cent by weight and which contains, as the plastic material, a copolymer of 60 to 85 per cent by weight of vinyl acetate and 15 to 40 per cent by weight of ethylene, whereby the copolymer may additionally contain from 1 to 5 per cent by weight, respectively, calculated on the total amount of vinyl acetate and ethylene, of carboxyl groups-containing monomer untis and/or of hydroxyl groups-containing monomer units, applying the plastics dispersion to the surface of the materials in an amount of 25 to 400 g/m², and, after the film has formed, pressing the materials on top of one another under a pressure of at least 0.5 bar.

2. Process as claimed in claim 1, characterized in that the plastics dispersion used contains, as the plastic material, a copolymer which, in the dried state in the form of an 0.5 mm thick film, has a tensile strength of 0.1 to 5 N/mm² (measured at a temperature of 23 °C and a relative humidity of 50 per cent).

3. Process as claimed in claim 1, characterized in that the plastics dispersion used contains, as the plastic material, a copolymer which, in the dried state in the form of an 0.5 mm thick film, has an elongation at break of 500 to 5,000 per cent (measured at a temperature of 23 °C and a relative humidity of 50 per cent).

4. Process as claimed in claim 1, characterized in that the materials coated with the plastics dispersion are pressed on top of each other at a temperature of 30 to 80 °C.

**Revendications**

1. Procédé pour préparer un collage entre deux matériaux par application d'un adhésif de contact sur les surfaces des matériaux à coller et assemblage des surfaces de matériaux ainsi enduites, sous l'application d'une pression, procédé caractérisé en ce qu'on utilise comme adhésif de contact une dispersion aqueuse de matière plastique ayant un extrait sec de 40 à 60 % en poids, qui contient comme matière plastique un copolymère de 60 à 85 % en poids d'acétate de vinyle et de 15 à 40 % en poids d'éthylène, le copolymère pouvant contenir en outre à chaque fois 1 à 5 % en poids, par rapport au poids total d'acétate de vinyle et d'éthylène, de motifs monomères contenant des groupes carboxyles et/ou contenant des groupes hydroxyles, on applique la dispersion de matière plastique en une quantité de 25 à 400 g/m² sur la surface des matériaux et, après obtention de la formation de pellicule, on presse les matériaux l'un contre l'autre avec une pression d'au moins 0,5 bar.

2. Procédé selon la revendication 1, caractérisé en ce qu'on utilise une dispersion de matière plastique qui contient comme matière plastique un copolymère qui présente, sous forme de pellicule à l'état sec à une épaisseur de 0,5 mm une résistance à la déchirure de 0,1 à 5 N/mm² (mesurée à une température de 23 °C et à une humidité relative de l'air de 50 %).

3. Procédé selon la revendication 1, caractérisé en ce qu'on utilise une dispersion de matière plastique qui contient comme matière plastique un copolymère qui, sous forme de pellicule à l'état sec sous une épaisseur de 0,5 mm présente un allongement de 500 à 5 000 % (mesuré à une température de 23 °C et à une humidité relative de l'air de 50 %).

4. Procédé selon la revendication 1, caractérisé en ce qu'on presse l'un contre l'autre à une température de 30 à 80 % les matériaux enduits de la dispersion de matière plastique.